# EUROPEAN PATENT APPLICATION

(11) **EP 4 503 674 A1**
(43) Date of publication of application: **05.02.2025**
(21) Application number: 22935096.2
(22) Date of filing: 28.03.2022
(51) Int. Cl.: H04W 4/46, H04W 72/04, H04W 92/18

(54) **TERMINAL AND COMMUNICATION METHOD**

(71) Applicant: NTT DOCOMO, INC., Tokyo 100-6150 (JP)
(72) Inventor: YOSHIOKA, Shohei, Tokyo 100-6150 (JP); KUMAGAI, Shinya, Tokyo 100-6150 (JP); TAKAHASHI, Yuki, Tokyo 100-6150 (JP); OKAMURA, Masaya, Tokyo 100-6150 (JP); OKANO, Mayuko, Tokyo 100-6150 (JP); NAGATA, Satoshi, Tokyo 100-6150 (JP)
(74) Representative: Hoffmann Eitle
(86) International application number: PCT/JP2022/015234
(87) International publication number: WO 2023/187943

(57) **Abstract**

A terminal includes: a receiving unit that receives a signal from another terminal on any subchannel included in a resource pool including non-contiguous frequency resources; a transmitting unit that transmits a signal to another terminal on any subchannel included in the resource pool; and a control unit that determines in which actual component carriers subchannels constituting the resource pool are included, wherein the transmitting unit transmits a data signal to another terminal in the resource pool.

## Description

### Technical Field

The present invention relates to a terminal and a communication method in a radio communication system.

### Background Art

In Long Term Evolution (LTE) and a successor system thereof (for example, LTE-Advanced (LTE-A) or New Radio (NR) (also referred to as 5G)), a device-to-device (D2D) technology in which terminals perform direct communication without going through a base station has been studied (for example, Non Patent Literature 1).

The D2D reduces traffic between the terminal and the base station, and enables communication between the terminals even when the base station becomes unable to communicate at the time of a disaster or the like. In the 3rd generation partnership project (3GPP), the D2D is referred to as "sidelink", but in the present specification, the D2D, which is a more generic term, is used. However, the sidelink is also used as necessary in a description of embodiments described below.

D2D communication is roughly classified into D2D discovery for discovering other communicable terminals and D2D communication (also referred to as D2D direct communication, terminal-to-terminal direct communication, or the like) for directly communicating between terminals. Hereinafter, when the D2D communication, the D2D discovery, and the like are not particularly distinguished, they are simply referred to as the D2D. Further, a signal transmitted and received by the D2D is referred to as a D2D signal. Various use cases of vehicle-to-everything (V2X) services in NR have been studied (for example, Non Patent Literature 2).

### Citation List

### Non Patent Literature

Non Patent Literature 1: 3GPP TS 38.211 V16.8.0 (2021-12)
Non Patent Literature 2: 3GPP TR 22.886 V15.1.0 (2017-03)

### Summary of Invention

### Technical Problem

In the terminal-to-terminal direct communication, a function of using a wideband to secure data resources, for example, carrier aggregation, is supported. When using the carrier aggregation, more flexible and efficient resource allocation is considered because the data resource needs to be scheduled for each carrier. However, a data signal transmission method is not established in a case where a wideband that is non-contiguous in a frequency domain is set as a resource pool used for the terminal-to-terminal direct communication.

The present invention has been made in view of the above points, and an object of the present invention is to use wideband resources that are non-contiguous in a frequency domain in terminal-to-terminal direct communication.

### Solution to Problem

According to the disclosed technology, there is provided a terminal including: a receiving unit that receives a signal from another terminal on any subchannel included in a resource pool including non-contiguous frequency resources; a transmitting unit that transmits a signal to another terminal on any subchannel included in the resource pool; and a control unit that determines in which actual component carriers subchannels constituting the resource pool are included, wherein the transmitting unit transmits a data signal to another terminal in the resource pool.

### Advantageous Effects of Invention

According to the disclosed technology, wideband resources that are non-contiguous in the frequency domain can be used for the terminal-to-terminal direct communication.

### Brief Description of Drawings

[Fig. 1] Fig. 1 is a diagram for describing a radio communication system according to an embodiment of the present invention.
[Fig. 2] Fig. 2 is a diagram illustrating Example (1) of a configuration of a virtual component carrier (CC) according to the embodiment of the present invention.
[Fig. 3] Fig. 3 is a diagram illustrating Example (2) of the configuration of the virtual CC according to the embodiment of the present invention.
[Fig. 4] Fig. 4 is a diagram for describing an example of device-to-device (D2D) communication according to the embodiment of the present invention.
[Fig. 5] Fig. 5 is a diagram for describing Example (1) of a resource pool according to the embodiment of the present invention.
[Fig. 6] Fig. 6 is a diagram for describing Example (2) of the resource pool according to the embodiment of the present invention.
[Fig. 7] Fig. 7 is a diagram for describing Example (1) of a control signal according to the embodiment of the present invention.
[Fig. 8] Fig. 8 is a diagram for describing Example (2) of the control signal according to the embodiment of the present invention.
[Fig. 9] Fig. 9 is a diagram for describing Example (1) of a data signal according to the embodiment of the present invention.
[Fig. 10] Fig. 10 is a diagram for describing Example (2) of the data signal according to the embodiment of the present invention.
[Fig. 11] Fig. 11 is a diagram for describing Example (1) of resource reservation according to the embodiment of the present invention.
[Fig. 12] Fig. 12 is a diagram for describing Example (2) of the resource reservation according to the embodiment of the present invention.
[Fig. 13] Fig. 13 is a diagram for describing Example (1) of hybrid automatic repeat and request (HARQ) feedback according to the embodiment of the present invention.
[Fig. 14] Fig. 14 is a diagram for describing Example (2) of the HARQ feedback according to the embodiment of the present invention.
[Fig. 15] Fig. 15 is a diagram for describing Example (3) of the HARQ feedback according to the embodiment of the present invention.
[Fig. 16] Fig. 16 is a diagram for describing Example (1) of a sidelink synchronization signal block (S-SSB) according to the embodiment of the present invention.
[Fig. 17] Fig. 17 is a diagram for describing Example (2) of the S-SSB according to the embodiment of the present invention.
[Fig. 18] Fig. 18 is a diagram illustrating an example of a functional configuration of a base station 10 according to the embodiment of the present invention.
[Fig. 19] Fig. 19 is a diagram illustrating an example of a functional configuration of a terminal 20 according to the embodiment of the present invention.
[Fig. 20] Fig. 20 is a diagram illustrating an example of a hardware configuration of the base station 10 or the terminal 20 according to the embodiment of the present invention.
[Fig. 21] Fig. 21 is a diagram illustrating an example of a configuration of a vehicle 2001 according to the embodiment of the present invention.

### Description of Embodiments

Hereinafter, an embodiment of the present invention will be described with reference to the drawings. Note that the embodiment described below is an example, and the embodiment to which the present invention is applied is not limited to the following embodiment.

In an operation of a radio communication system of the embodiment of the present invention, an existing technology is used as appropriate. The existing technology is, for example, the existing LTE, but is not limited thereto. In addition, the term "LTE" used in the present specification has a broad meaning including LTE-Advanced and successor systems thereof (for example, New Radio (NR)) or a wireless local area network (LAN) unless otherwise specified.

In the embodiment of the present invention, a duplex method may be a time division duplex (TDD), a frequency division duplex (FDD) method, or other methods (for example, flexible duplex).

In addition, in the embodiment of the present invention, the expression "configuring" a radio parameter and the like may mean that a predetermined value is pre-configured, or that a radio parameter notified from a base station 10 or a terminal 20 is configured.

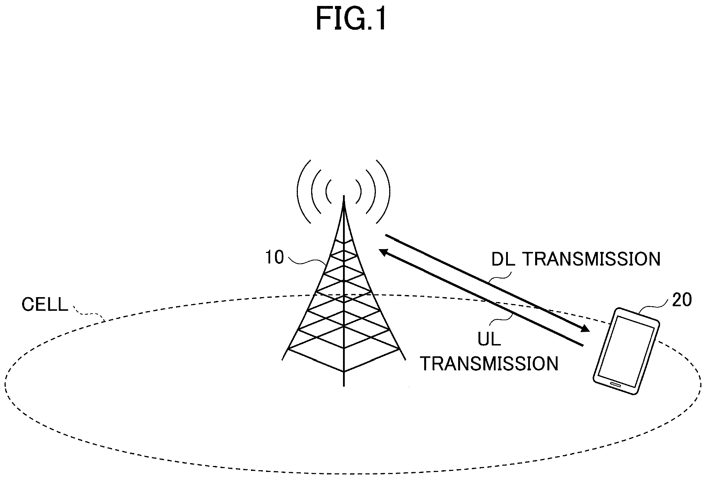

Fig. 1 is a diagram for describing a radio communication system according to the embodiment of the present invention. As illustrated in Fig. 1, the radio communication system according to the embodiment of the present invention includes the base station 10 and the terminal 20. Although one base station and one terminal are illustrated in Fig. 1, this is only an example, and a plurality of base stations 10 and a plurality of terminals 20 may be provided.

The base station 10 is a communication device that provides one or more cells and performs radio communication with the terminal 20. Physical resources of a radio signal are defined in a time domain and a frequency domain, the time domain may be defined by the number of orthogonal frequency division multiplexing (OFDM) symbols, and the frequency domain may be defined by the number of subcarriers or the number of resource blocks. In addition, a transmission time interval (TTI) in the time domain may be a slot, or the TTI may be a subframe.

The base station 10 transmits a synchronization signal and system information to the terminal 20. The synchronization signal is, for example, an NR-primary synchronization signal (PSS) or an NR-secondary synchronization signal (SSS). The system information is transmitted on, for example, an NR-physical broadcast channel (PBCH) and is also referred to as broadcast information. The synchronization signal and the system information may also be referred to as an SS/PBCH block (SSB). As illustrated in Fig. 1, the base station 10 transmits a control signal or data to the terminal 20 in downlink (DL) and receives a control signal or data from the terminal 20 in uplink (UL). Both the base station 10 and the terminal 20 can transmit and receive a signal by performing beamforming. In addition, both the base station 10 and the terminal 20 can apply communication based on multiple input multiple output (MIMO) to DL or UL. In addition, both the base station 10 and the terminal 20 may perform communication via a secondary cell (SCell) and a primary cell (PCell) by carrier aggregation (CA). Furthermore, the terminal 20 may perform communication via a primary cell of the base station 10 and a primary secondary cell group (SCG) cell (PSCell) of another base station 10 by dual connectivity (DC).

The terminal 20 is a communication device having a radio communication function such as a smartphone, a mobile phone, a tablet, a wearable terminal, or a machine-to-machine (M2M) communication module. As illustrated in Fig. 1, the terminal 20 uses various communication services provided by the radio communication system by receiving a control signal or data from the base station 10 in DL and transmitting a control signal or data to the base station 10 in UL. In addition, the terminal 20 receives various reference signals transmitted from the base station 10 and measures a propagation path quality based on a result of receiving the reference signals. The terminal 20 may be referred to as a user equipment (UE), and the base station 10 may be referred to as a gNB.

In the LTE or NR, a carrier aggregation function using a wideband to secure data resources is supported. In the carrier aggregation function, a plurality of component carriers are aggregated, so that wideband data resources can be secured. For example, a 100-MHz bandwidth may be used by aggregating multiple 20-MHz bandwidths.

In the carrier aggregation function according to the related art, there is a problem that a data resource needs to be scheduled for each of a plurality of aggregated component carriers, and overhead of resource allocation is large.

Therefore, a method of performing resource allocation in a scheduling unit with a granularity different from that of the component carrier and a terminal that performs resource allocation in a scheduling unit with the granularity different from that of the component carrier will be described.

A framework that performs scheduling or aggregation with the granularity different from that of the component carrier is defined as frequency fragmentation. The "component carrier" referred to herein may mean a set of frequency resources corresponding to a conventional scheduling unit (that is, an actual CC described below), and a set of frequency resources in the frequency fragmentation (that is, a virtual CC described below) may also be referred to as the "component carrier".

In addition, in the carrier aggregation, aggregation with the granularity different from that of the component carrier is defined as non-contiguous carrier aggregation.

In addition, in the carrier aggregation (non-contiguous carrier aggregation), scheduling with the granularity different from that of the component carrier is defined as non-contiguous scheduling.

The granularity different from that of the component carrier described above may be a virtual component carrier (virtual CC) unit, a bandwidth part (BWP) unit, a physical resource block (PRB) unit, or a PRB set unit.

Here, the virtual CC is a carrier set in which all or some of frequency resources included in each component carrier among the plurality of component carriers are aggregated.

For example, it may be assumed that the virtual CC includes a plurality of BWPs.

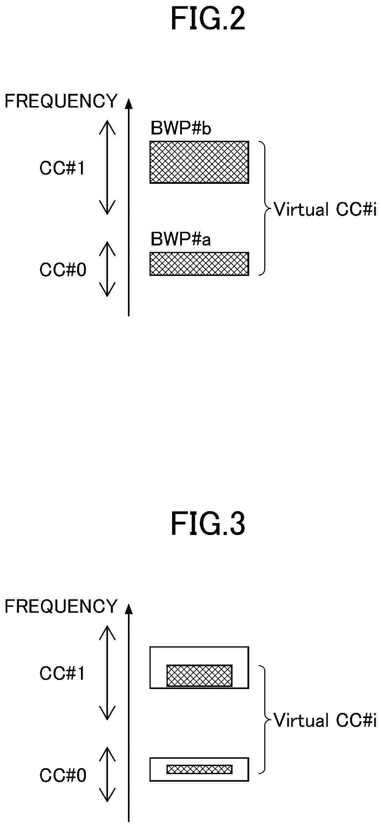

Fig. 2 is a diagram illustrating Example (2) of a configuration of the virtual CC according to the embodiment of the present invention. A virtual CC #i illustrated in Fig. 2 is a carrier set in which a BWP #a and a BWP #b included in component carriers among a plurality of component carriers (CC #0 and CC #1) are aggregated.

Furthermore, it may be assumed that the virtual CC includes a plurality of PRBs or PRB sets.

Fig. 3 is a diagram illustrating Example (2) of the configuration of the virtual CC according to the embodiment of the present invention. The virtual CC #i illustrated in Fig. 3 is a carrier set in which a plurality of PRBs included in component carriers among a plurality of component carriers (CC #0 and CC #1) are aggregated. The plurality of PRBs or PRB sets may be included in one or a plurality of BWPs.

The terminal 20 may transmit terminal capability information indicating the configuration of the virtual CC to the base station 10. The terminal capability information indicating the configuration of the virtual CC may be, for example, information indicating that the virtual CC includes a plurality of BWPs or information indicating that the virtual CC includes a plurality of PRBs.

Furthermore, the terminal capability information indicating the configuration of the virtual CC may be information indicating that a virtual CC including a plurality of BWPs and a virtual CC including a plurality of PRBs are supported.

Furthermore, the terminal 20 may assume that an index for identifying each virtual CC is configured by the base station 10 by radio resource control (RRC). The terminal 20 may assume that the index for identifying each virtual CC is a minimum value (for example, i = 0 in Fig. 2 or 3) or a maximum value (for example, i = 1 in Fig. 2 or 3) of an index of the component carrier.

The terminal 20 may assume that the scheduling unit in the non-contiguous scheduling is notified using (i) the index of the virtual CC, (ii) the indexes of the plurality of component carriers + the indexes of the plurality of BWPs, (iii) the indexes of the plurality of component carriers + the indexes of the plurality of PRBs or PRB sets, (iv) the indexes of the plurality of component carriers + the indexes of the plurality of BWPs + the indexes of the plurality of PRBs or PRB sets, or the like.

Furthermore, the terminal 20 may assume that a resource unit of the carrier aggregation is the virtual CC, the BWP, the PRB, or the PRB set.

According to the above-described operation, resource allocation in the scheduling unit with the granularity different from that of the component carrier can be implemented.

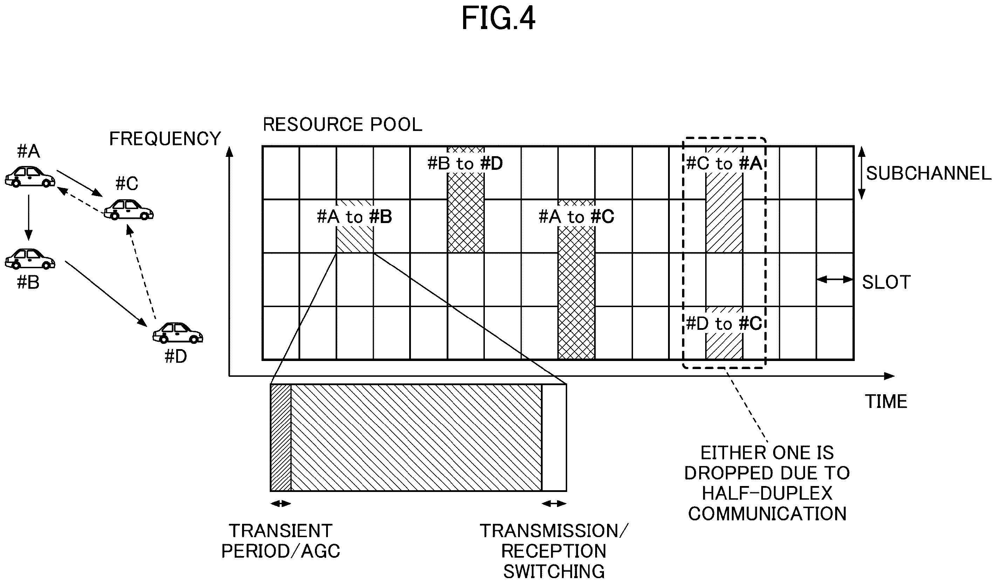

Fig. 4 is a diagram for describing an example of device-to-device (D2D) communication according to the embodiment of the present invention. In the 3rd generation partnership project (3GPP), implementation of vehicle-to-everything (V2X) or enhanced V2X (eV2X) by extending a D2D function has been studied, and the process of codifying into technical specifications is underway. V2X is a part of intelligent transport systems (ITS), and is a generic term for vehicle-to-vehicle (V2V) meaning a form of communication performed between vehicles, vehicle-to-infrastructure (V2I) meaning a form of communication performed between a vehicle and a road-side unit (RSU) installed on roadside, vehicle-to-network (V2N) meaning a form of communication performed between a vehicle and an ITS server, and vehicle-to-pedestrian (V2P) meaning a form of communication performed between a vehicle and a mobile terminal carried by a pedestrian.

In addition, in the 3GPP, V2X using cellular communication of the LTE or NR and terminal-to-terminal communication has been studied. V2X using the cellular communication is also referred to as cellular V2X. In V2X of the NR, studies to implement a large capacity, a low latency, high reliability, and quality of service (QoS) control are in progress.

For V2X of the LTE or NR, it is expected that studies not limited to the 3GPP specifications will be conducted in the future. For example, it is expected that studies will be conducted on methods of securing interoperability, reducing cost by implementation of a higher layer, using or switching a plurality of radio access technologies (RATs), handling regulations in each country, acquiring and distributing data of a V2X platform of the LTE or NR, and managing and using a database.

In the embodiment of the present invention, the communication device is not limited to any form. For example, the communication device may be mounted on a vehicle, the communication device may be a terminal carried by a person, the communication device may be a device mounted on a drone or aircraft, or the communication device may be a base station, an RSU, a relay station (relay node), a terminal having a scheduling capability, or the like.

Sidelink (SL) may be distinguished from uplink (UL) and downlink (DL) based on any one or a combination of 1) to 4). SL may be referred to as a different name.
1) Resource arrangement in time domain
2) Resource arrangement in frequency domain
3) Synchronization signal to be referred to (including sidelink synchronization signal (SLSS))
4) Reference signal used for path loss measurement for transmit power control

In addition, for OFDM (orthogonal frequency division multiplexing) in SL or UL, any of cyclic-prefix OFDM (CP-OFDM), discrete Fourier transform-spread-OFDM (DFT-S-OFDM), OFDM without transform precoding, and OFDM with transform precoding may be applied.

In SL, a transmission resource may be dynamically allocated by downlink control information (DCI) transmitted from the base station 10 to the terminal 20, or semi-persistent scheduling (SPS) may also be possible. In addition, the terminal 20 may autonomously select the transmission resource from a resource pool.

The slot in the embodiment of the present invention may be read as a symbol, a mini-slot, a subframe, a radio frame, a transmission time interval (TTI), and a time resource having a predetermined width. The cell in the embodiment of the present invention may be read as a cell group, a carrier component, a BWP, a resource pool, a resource, a radio access technology (RAT), a system (including a wireless LAN), or the like.

In the embodiment of the present invention, the terminal 20 is not limited to a V2X terminal, and may be any type of terminal that performs D2D communication. For example, the terminal 20 may be a terminal carried by a user, such as a smartphone, or may be an Internet of Things (IoT) device such as a smart meter.

As illustrated in Fig. 4, an environment in which a plurality of UEs such as a UE #A, a UE #B, a UE #C, and a UE #D communicate with each other is assumed. The resource pool used for transmission and reception by each UE is a set of resources in the time domain and the frequency domain. The resource pool may be configured or pre-configured by a system or service provider. For example, in the resource pool, several time resources based on a period may be available for periodic traffic. Further, for example, in the resource pool, some frequency resources may be unavailable to reduce interference with a Uu interface (a radio interface between universal terrestrial radio access network (UTRAN) and a user equipment (UE)).

A subchannel in the resource pool illustrated in Fig. 4 is a unit of scheduling in the frequency domain. For example, {10, 12, 15, 20, 25, 50, 75, 100} PRBs may be configured or pre-configured as one subchannel.

The slot in the resource pool illustrated in Fig. 4 is a unit of scheduling in the time domain. Scheduling performed in units of symbols may be excessively complex in a case where the UE autonomously selects the resource. However, scheduling does not have to be performed in units of slots.

As illustrated in Fig. 4, the start of a slot to be transmitted from the UE #A to the UE #B is a transient period from the viewpoint of a transmitting UE. The transient period is a period necessary for controlling transmit power. On the other hand, the start of the slot to be transmitted from the UE #A to the UE #B is used for auto gain control (AGC) from the viewpoint of a receiving UE. Received power greatly varies between links, and a predetermined period is required to adjust a power range. By performing scheduling in units of slots, an increase in AGC opportunities can be prevented.

As illustrated in Fig. 4, the end of the slot to be transmitted from the UE #A to the UE #B is used for a transmission/reception switching period. A certain UE may perform transmission in a slot n and then perform reception in a slot n+1. The transmission/reception switching period is defined for each slot.

As illustrated in Fig. 4, in a case where transmission from the UE #C to the UE #A and transmission from the UE #D to the UE #C overlap in the same slot, the UE #C cannot simultaneously perform transmission and reception, and thus, it is necessary to skip transmission or reception. That is, the D2D communication is half-duplex communication.

A default setting in a case of being out of a coverage of the base station may be pre-configured. RRC connection/setting between UEs that perform unicast is referred to as PC5-RRC connection/setting.

Here, there is a possibility that the scheduling using the virtual CC described above can also be applied to sidelink. In addition, it is necessary to consider not only an operation of the carrier but also an operation of the resource pool. Further, there is a possibility that the concept of the carrier is not applied.

Hereinafter, the terms carrier, actual CC, and virtual CC are used, but the terms are not limited thereto. For example, the actual CC may mean a set of contiguous frequency resources. For example, the virtual CC may mean aggregated frequency resources of the actual CC. For example, the virtual CC may be treated as one CC, and the actual CC does not have to be defined.

The actual CC may be a CC of the same band or a CC of another band. "Configuration" may be read as "pre-configuration".

The subchannel may be any one or a combination of 1) to 3) described below.

1) Unit of physical sidelink control channel (PSCCH) transmission resource in frequency domain
2) Unit of physical sidelink shared channel (PSSCH) transmission resource in frequency domain
3) Unit of physical sidelink feedback channel (PSFCH) transmission resource in frequency domain

"Transmission" and "reception" may be replaceable with each other.

Proposal 1) An SL resource pool may include non-contiguous frequency resources. Hereinafter, the "SL resource pool" may mean a "resource pool for terminal-to-terminal communication (for example, sidelink communication)".

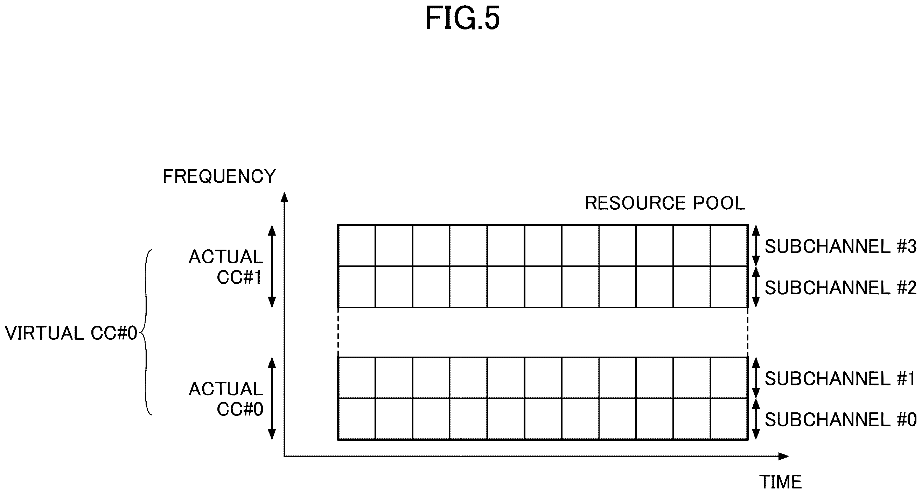

Proposal 1-1) Fig. 5 is a diagram for describing Example (1) of the resource pool according to the embodiment of the present invention. As illustrated in Fig. 5, in a case where a plurality of actual CCs are configured as the virtual CC, each subchannel may be configured in any actual CC, and a set of the subchannels may form the resource pool. For example, each subchannel in the resource pool may be confined within a single actual CC, and it is not assumed that each subchannel spans multiple actual CCs. Fig. 5 illustrates an example in which a subchannel #0 and a subchannel #1 are configured in an actual CC #0, and a subchannel #2 and a subchannel #3 are configured in an actual CC #1.

Each subchannel in the resource pool may be limited to contiguous frequency resources in the configured actual CC, or may include non-contiguous frequency resources. The resource pool may be limited to a case where a numerology or subcarrier spacing (SCS), is the same between the actual CCs. In the resource pool, the numerology or SCS may be different between the actual CCs.

Proposal 1-1) described above enables flexible and highly efficient resource allocation. In addition, a configuration in the subchannel can be prevented from being complex.

### Proposal 1-2)

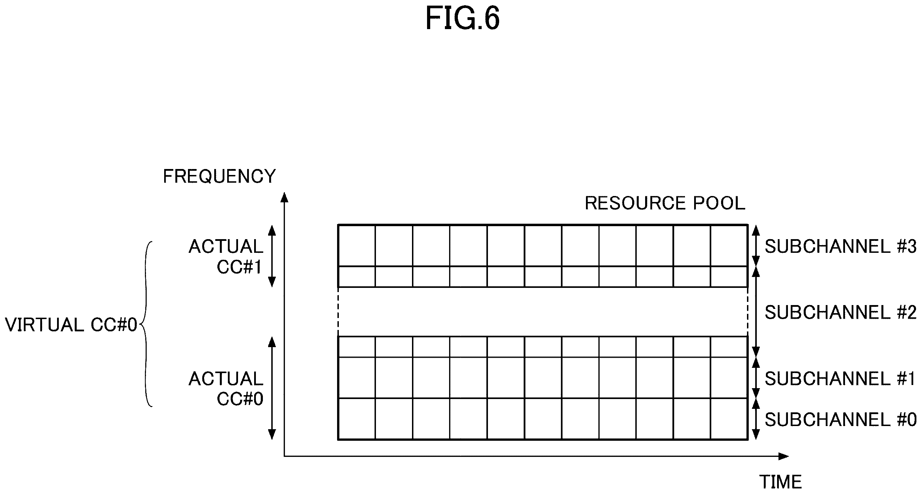

Fig. 6 is a diagram for describing Example (2) of the resource pool according to the embodiment of the present invention. As illustrated in Fig. 6, in a case where a plurality of actual CCs are configured as the virtual CC, some or all of the subchannels may be configured in one or more actual CCs, and a set of the subchannels may form the resource pool. For example, the subchannels in the resource pool may span multiple actual CCs. Fig. 6 illustrates an example in which the subchannel #0 and the subchannel #1 are configured in the actual CC #0, the subchannel #2 spans the actual CC #0 and the actual CC #1, and the subchannel #3 is configured in the actual CC #1.

Each subchannel in the resource pool may be limited to contiguous frequency resources in the configured actual CC, or may include non-contiguous frequency resources. The resource pool may be limited to a case where the numerology or SCS is the same between the actual CCs. In the resource pool, the numerology or SCS may be different between the actual CCs.

In a case where the subchannel spans multiple actual CCs, a boundary between the CCs may be at any frequency position, and there may be a predetermined constraint. For example, N = ΣᵢNᵢ, in which N represents the number of PRBs of the subchannel, and Nᵢ represents the number of PRBs included in the subchannel for each actual CC. At this time, Nᵢ may have to be a predetermined number or more. That is, for each subchannel, the predetermined number or more of PRBs may be included for each actual CC.

Proposal 1-2) described above enables flexible and highly efficient resource allocation.

Proposal 2) A control signal (for example, a PSCCH or sidelink control information (SCI)) may be transmitted in the SL resource pool including non-contiguous frequency resources.

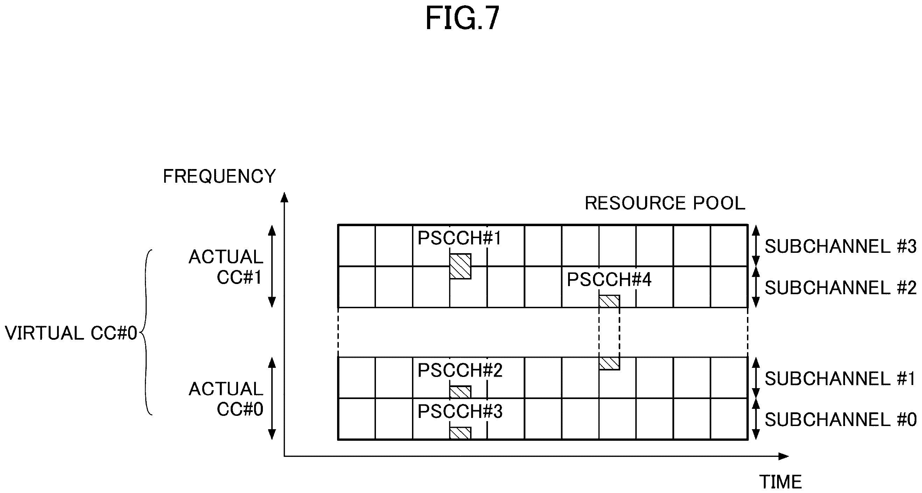

Proposal 2-1) Fig. 7 is a diagram for describing Example (1) of the control signal according to the embodiment of the present invention. Like a PSCCH #1, a PSCCH #2, or a PSCCH #3 illustrated in Fig. 7, in the resource pool described in Proposal 1-1), the PSCCH or SCI may be transmitted by being confined within a single actual CC and does not have to be transmitted over multiple actual CCs.

For example, it may be assumed that the PSCCH or SCI is always transmitted by using a single subchannel like the PSCCH #2 or the PSCCH #3, or the PSCCH or SCI may be transmitted by using a plurality of subchannels like the PSCCH #1. The PSCCH transmission or SCI transmission may be limited to using contiguous frequency resources in the actual CC, or may be performed on non-contiguous frequency resources.

According to Proposal 2-1) described above, control signal transmission/reception processing can be simplified.

Proposal 2-2) Like a PSCCH #4 illustrated in Fig. 7, in the resource pool described in Proposal 1-1), the PSCCH or SCI may be transmitted over multiple actual CCs. For example, the PSCCH or SCI may be transmitted by using a plurality of subchannels. Such an operation may be limited to a case where the numerology or SCS is the same between the actual CCs. In addition, the operation may be performed in a case where the numerology or SCS is different between the actual CCs. The PSCCH transmission or SCI transmission may be limited to using contiguous frequency resources in the actual CC, or may be performed on non-contiguous frequency resources.

According to Proposal 2-2), it is possible to flexibly determine a control signal transmission/reception resource.

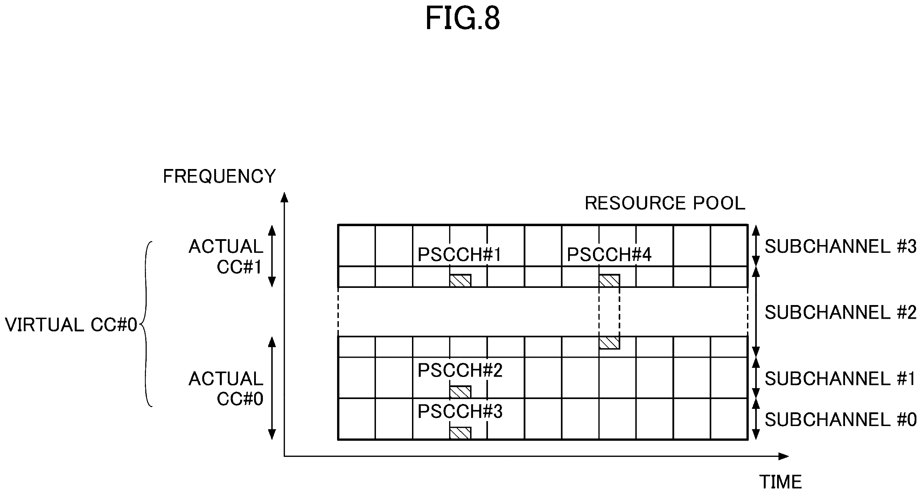

Proposal 2-3) Fig. 8 is a diagram for describing Example (2) of the control signal according to the embodiment of the present invention. Like the PSCCH #1 illustrated in Fig. 8, in the resource pool described in Proposal 1-2), the PSCCH or SCI may be transmitted by being confined within a single actual CC and does not have to be transmitted over multiple actual CCs. For example, the PSCCH or SCI may be transmitted on some of the frequency resources of the subchannel such that the PSCCH or SCI is transmitted on only any actual CC in a case where the subchannel spans multiple actual CCs. The PSCCH transmission or SCI transmission may be limited to using contiguous frequency resources in the actual CC, or may be performed on non-contiguous frequency resources.

According to Proposal 2-3) described above, control signal transmission/reception processing can be simplified.

Proposal 2-4) Like the PSCCH #4 illustrated in Fig. 8, in the resource pool described in Proposal 1-2), the PSCCH or SCI may be transmitted over multiple actual CCs. Such an operation may be limited to a case where the numerology or SCS is the same between the actual CCs. In addition, the operation may be performed in a case where the numerology or SCS is different between the actual CCs. The PSCCH transmission or SCI transmission may be limited to using contiguous frequency resources in the actual CC, or may be performed on non-contiguous frequency resources.

According to Proposal 2-4), it is possible to flexibly determine a control signal transmission/reception resource.

Proposal 3) A data signal (PSSCH or SL-SCH) may be transmitted in the resource pool including non-contiguous frequency resources.

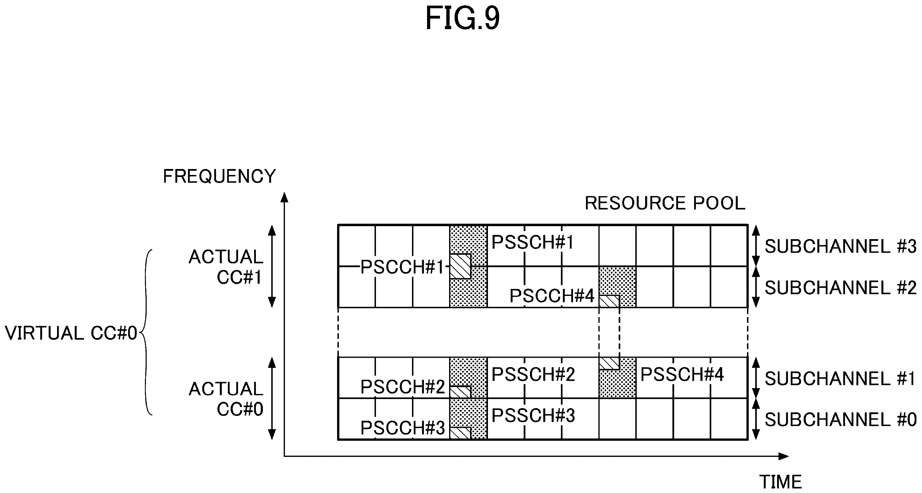

Proposal 3-1) Fig. 9 is a diagram for describing Example (1) of the data signal according to the embodiment of the present invention. Like a PSSCH #1, a PSSCH #2, or a PSSCH #3 illustrated in Fig. 9, in the resource pool described in Proposal 1-1), the PSSCH or SL-SCH may be transmitted by being confined within a single actual CC and does not have to be transmitted over multiple actual CCs.

For example, it may be assumed that the PSSCH or SL-SCH is always transmitted using a single subchannel like the PSSCH #2 or the PSSCH #3, or the PSSCH or SL-SCH may be transmitted using a plurality of subchannels like the PSSCH #1. Transmission using a plurality of subchannels like the PSSCH #1 may be limited and executable within the actual CC. The PSSCH transmission or SL-SCH transmission may be limited to contiguous frequency resources in the actual CC or may be performed on non-contiguous frequency resources. Proposal 3-1) may be combined with Proposal 2-1) or Proposal 2-2).

According to Proposal 3-1) described above, data signal transmission/reception processing can be simplified.

Proposal 3-2) Like a PSSCH #4 illustrated in Fig. 9, in the resource pool described in Proposal 1-1), the PSSCH or SL-SCH may be transmitted over multiple actual CCs. For example, the PSSCH or SL-SCH may be transmitted using a plurality of subchannels. Such an operation may be limited to a case where the numerology or SCS is the same between the actual CCs. In addition, the operation may be performed in a case where the numerology or SCS is different between the actual CCs. Proposal 3-2) may be combined with Proposal 2-1) or Proposal 2-2).

According to Proposal 3-2), it is possible to flexibly determine a data signal transmission/reception resource.

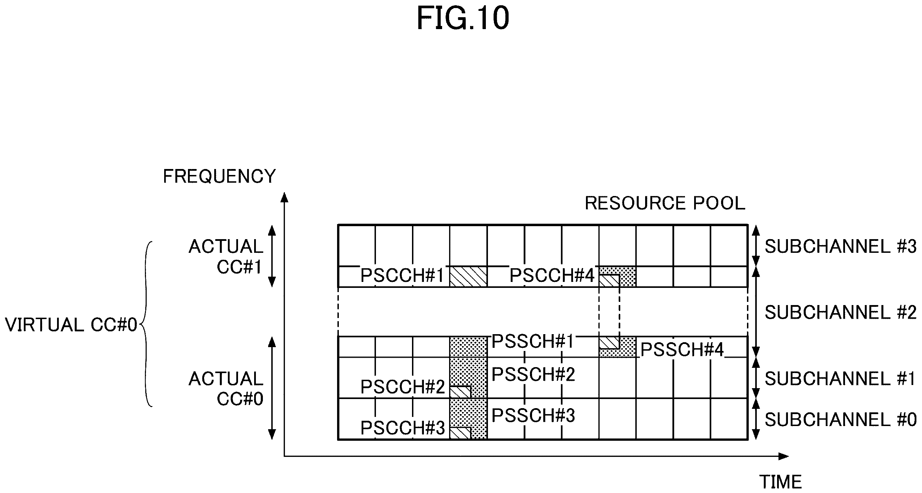

Proposal 3-3) Fig. 10 is a diagram for describing Example (2) of the data signal according to the embodiment of the present invention. Like the PSSCH #1 illustrated in Fig. 10, in the resource pool described in Proposal 1-2), the PSSCH or SL-SCH may be transmitted by being confined within a single actual CC and does not have to be transmitted over multiple actual CCs. For example, transmission using a plurality of subchannels may be performed only within the actual CC. The PSSCH transmission or SL-SCH transmission may be limited to contiguous frequency resources in the actual CC or may be performed on non-contiguous frequency resources.

According to Proposal 3-3) described above, data signal transmission/reception processing can be simplified.

Proposal 3-4) Like the PSSCH #4 illustrated in Fig. 10, in the resource pool described in Proposal 1-2), the PSSCH or SL-SCH may be transmitted over multiple actual CCs. Such an operation may be limited to a case where the numerology or SCS is the same between the actual CCs. In addition, the operation may be performed in a case where the numerology or SCS is different between the actual CCs.

According to Proposal 3-4), it is possible to flexibly determine a data signal transmission/reception resource.

Proposal 4) Resource reservation may be performed in the resource pool including non-contiguous frequency resources. Proposal 4) may be combined with any one of Proposal 1), Proposal 2), and Proposal 3).

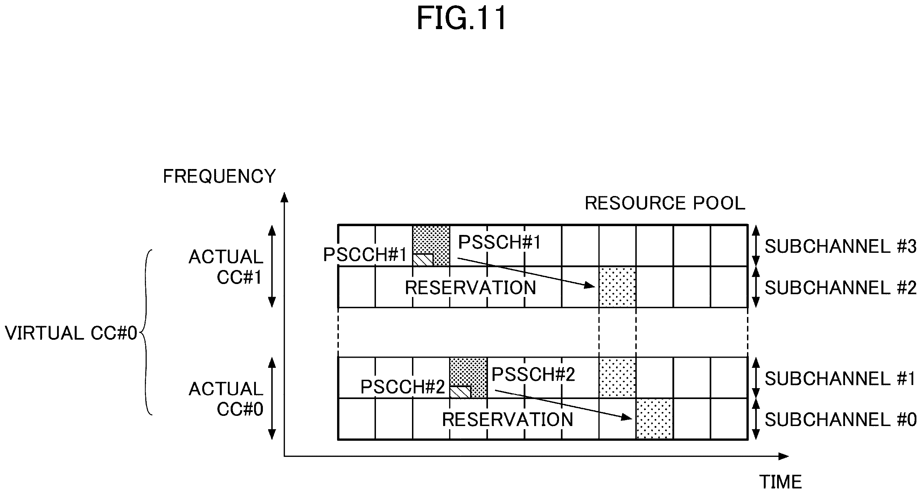

Proposal 4-1) Fig. 11 is a diagram for describing Example (1) of the resource reservation according to the embodiment of the present invention. Like the PSCCH #2 and reservation from the PSSCH #2 illustrated in Fig. 11, the PSCCH/PSSCH resource limited to any actual CC may be indicated, and the PSCCH/PSSCH resource spanning multiple actual CCs does not have to be indicated. The expression "PSCCH/PSSCH" may mean the "PSCCH and/or PSSCH".

According to Proposal 4-1), processing related to the resource reservation can be simplified.

Proposal 4-2) Like the PSSCH #1 and reservation from PSCCH #1 illustrated in Fig. 11, the PSCCH/PSSCH resource spanning multiple actual CCs may be indicated. Such an operation may be limited to a case where the numerology or SCS is the same between the actual CCs. In addition, the operation may be performed in a case where the numerology or SCS is different between the actual CCs.

According to Proposal 4-2) described above, flexible resource reservation can be performed.

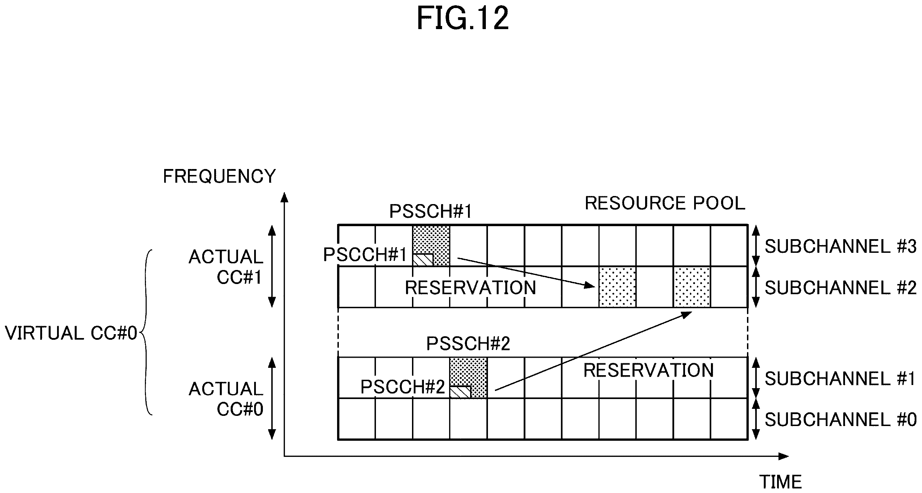

Proposal 4-3) Fig. 12 is a diagram for describing Example (2) of the resource reservation according to the embodiment of the present invention. Like the PSSCH #1 and the reservation from the PSCCH #1 illustrated in Fig. 12, a signal for the resource reservation may be transmitted on the same actual CC as that for a resource to be reserved, or does not have to be transmitted on a different actual CC. For example, all of resources to be reserved may reside in the same actual CC, or some of the resources to be reserved may reside in the same actual CC.

According to Proposal 4-3), processing related to the resource reservation can be simplified.

Proposal 4-4) Like the PSCCH #2 and the reservation from the PSSCH #2 in Fig. 12, a signal for resource reservation may be transmitted on the actual CC different from that for the resource to be reserved. Such an operation may be limited to a case where the numerology or SCS is the same between the actual CCs. In addition, the operation may be performed in a case where the numerology or SCS is different between the actual CCs.

According to Proposal 4-4) described above, flexible resource reservation can be performed.

Proposal 4-5) In a case where the numerology or SCS is different between the actual CCs, time designation for the resource reservation may be as in any of 1) to 3) described below.

1) The time designation may be performed based on the numerology or SCS of the actual CC on which the signal for resource reservation is transmitted.
2) The time designation may be performed based on the numerology or SCS of the actual CC for the resource to be reserved.
3) The time designation may be performed based on the lower or higher numerology or SCS of the actual CC on which the signal for resource reservation is transmitted or the actual CC for the resource to be reserved.

According to Proposal 4-5) described above, it is possible to clarify an operation in a case where the numerology or SCS is different between the actual CCs for the signal for resource reservation and the resource to be reserved.

Proposal 4-6) For periodic resource reservation and aperiodic resource reservation, different methods among Proposal 4-1), Proposal 4-2), Proposal 4-3), Proposal 4-4), and Proposal 4-5) may be applied.

According to Proposal 4-6) described above, an appropriate method can be applied to each of the periodic resource reservation and the aperiodic resource reservation, and an effect of the SL resource pool including non-contiguous frequency resources can be maximized.

Proposal 5) A feedback signal (PSFCH) may be transmitted in the SL resource pool including non-contiguous frequency resources. Proposal 5) may be combined with any one of Proposal 1), Proposal 2), Proposal 3), and Proposal 4).

The PSFCH may have any format. A PSFCH resource may be transmittable and receivable on the end of the slot excluding a gap symbol, or may be transmittable and receivable on any time resource. For example, the PSFCH may be transmittable and receivable on all or some symbols of the slot. For example, the PSFCH may be a PSFCH used for hybrid automatic repeat and request (HARQ) feedback, may be a PSFCH used for contention notification in UE-to-UE cooperation, or may be a PSFCH used for transmission of other information.

Proposal 5-1) A PSFCH transmission resource for PSCCH/PSSCH reception may be determined by any method of 1) to 3) described below.

1) The PSFCH transmission resource may be configured or determined in association with a PSCCH/PSSCH resource.
2) The PSFCH transmission resource for the PSCCH/PSSCH reception may be determined or designated by a PSCCH/PSSCH transmitting UE.
3) The PSFCH transmission resource for the PSCCH/PSSCH reception may be determined or designated by a PSFCH transmitting UE.

According to 1) described above, it is easy to achieve common understanding on the PSFCH resource between the UEs. Further, according to 2) and 3) described above, the PSFCH resource can be flexibly determined.

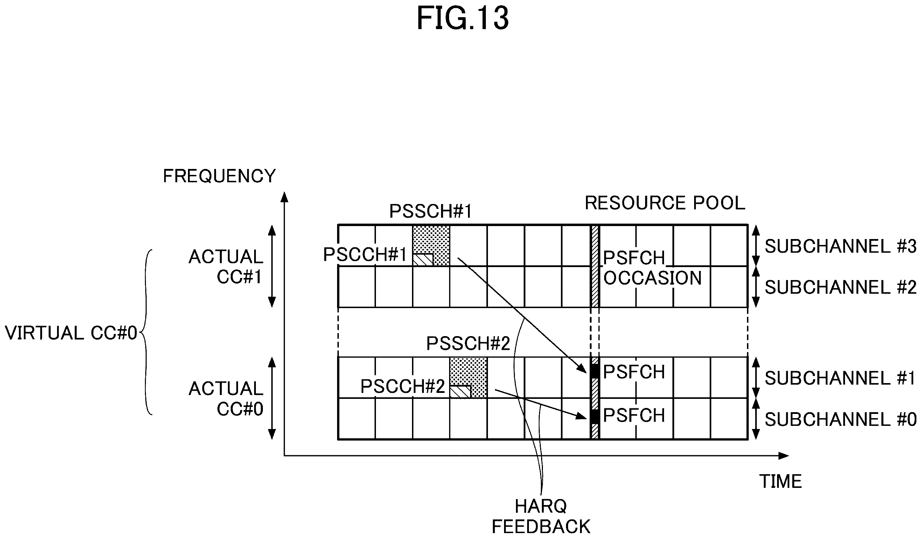

Proposal 5-2) Fig. 13 is a diagram for describing Example (1) of the HARQ feedback according to the embodiment of the present invention. Any rule of 1) to 6) described below may be applied to the PSCCH/PSSCH reception resource and the PSFCH transmission resource.

1) Like a PSCCH #2 and a PSFCH corresponding to the PSSCH #2 illustrated in Fig. 13, the PSCCH/PSSCH reception resource and the PSFCH transmission resource may be arranged on the same actual CC.
2) Like a PSCCH #1 and a PSFCH corresponding to the PSSCH #1 illustrated in Fig. 13, the PSCCH/PSSCH reception resource and the PSFCH transmission resource may be arranged on different actual CCs.
3) In a case where the PSCCH/PSSCH reception is groupcast or broadcast, when a plurality of PSCCH/PSSCH receiving UEs use different PSFCH transmission resources, the PSFCH transmission resources may be arranged on the same actual CC.
4) In a case where the PSCCH/PSSCH reception is groupcast or broadcast, when a plurality of PSCCH/PSSCH receiving UEs use different PSFCH transmission resources, the PSFCH transmission resources may be arranged on different actual CCs.
5) 2) and 4) described above may be applied only to a case where the numerology or SCS is the same between the actual CCs.
6) 2) and 4) described above may be applied to a case where the numerology or SCS is different between the actual CCs.

A UE operation can be simplified by 1), 3), and 5) described above. According to 2), 4), and 6), the PSFCH resource can be flexibly configured.

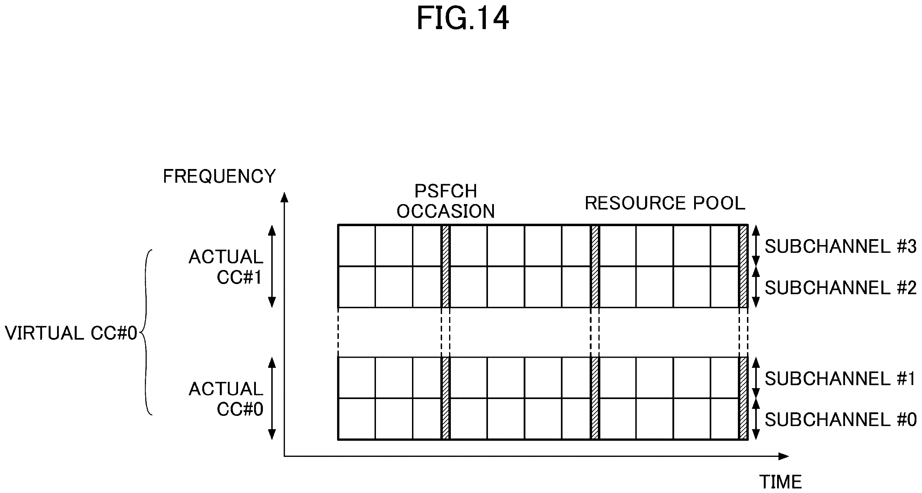

Proposal 5-3) Fig. 14 is a diagram for describing Example (2) of the HARQ feedback according to the embodiment of the present invention. As illustrated in Fig. 14, a PSFCH occasion may be the same time resource between the actual CCs.

According to Proposal 5-3) described above, an operation related to determination of the PSFCH occasion can be simplified.

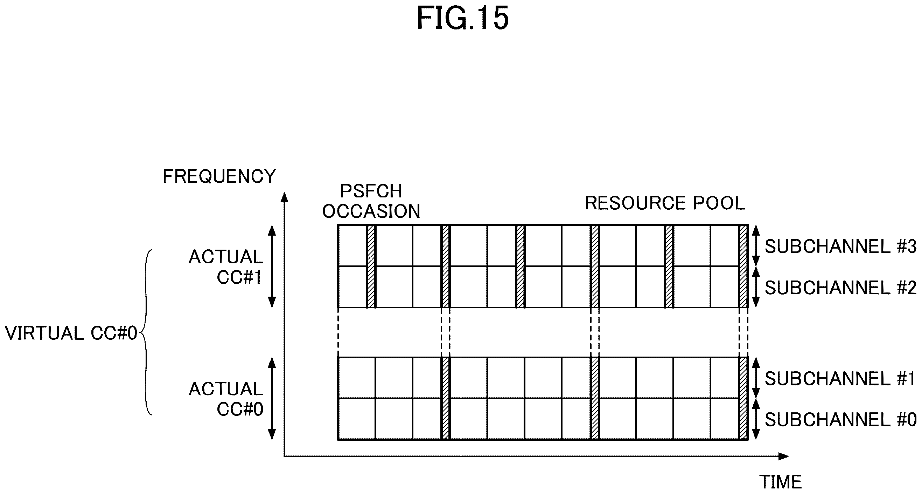

Proposal 5-4) Fig. 15 is a diagram for describing Example (3) of the HARQ feedback according to the embodiment of the present invention. As illustrated in Fig. 15, the PSFCH occasion may be a different time resource between the actual CCs. In the example of Fig. 15, the PSFCH occasion is configured every two slots in the actual CC #1, and the PSFCH occasion is configured every four slots in the actual CC #0.

According to Proposal 5-4) described above, it is possible to flexibly configure the PSFCH, and it is possible to achieve a suitable balance between low latency and overhead.

Proposal 5-5) In a case where the numerology, that is, the SCS, is different between the actual CCs, the number of PSFCH symbols may be determined based on the numerology, that is, the SCS. For example, the number of PSFCH symbols in the minimum numerology, that is, SCSµₘᵢₙ, excluding a copy symbol for the AGC may be one, and the number of PSFCH symbols in the numerology, that is, SCSp, may be 2^{µ-µmin}.

Further, a minimum time gap between the PSCCH/PSSCH reception and the PSFCH transmission may be determined based on the numerology or SCS. For example, the minimum time gap may be determined based on the numerology or SCS of the actual CC for the PSCCH/PSSCH reception. For example, the minimum time gap may be determined based on the numerology or SCS of the actual CC for the PSFCH transmission.

According to Proposal 5-5) described above, it is possible to clarify an operation related to feedback in a case where the numerology or SCS is different between the actual CCs.

Proposal 5-6) A UE capability and a UE operation related to simultaneous PSFCH transmission and/or simultaneous PSFCH reception may be defined or performed on each actual CC, or may be defined or performed in the entire resource pool or over multiple actual CCs.

Proposal 6) For the SL resource pool including non-contiguous frequency resources, usability and a use method of the resource pool may be determined based on the UE capability.

Proposal 6-1) Only a UE that can use all the actual CCs included in the SL resource pool may be able to use the SL resource pool. For example, the UE that can use some of the actual CCs included in the SL resource pool does not have to be permitted to use the SL resource pool.

According to Proposal 6-1), communication quality in the SL resource pool including non-contiguous frequency resources can be maintained high. It is possible to avoid a case in which there is a UE that cannot detect the reservation due to the UE capability.

Proposal 6-2) A UE that can use at least some of the actual CCs included in the SL resource pool may be able to use the SL resource pool. For example, Proposal 6-2) may be applied to a case where transmission and reception of various signals and resource reservation are performed only on the actual CC, that is, Proposal 1-1), Proposal 2-1), Proposal 3-1), Proposal 4-1), Proposal 4-3), and 1) of Proposal 5-2).

According to Proposal 6-2) described above, UEs supporting only limited frequency bands (for example, low cost UE and power saving UE) can also use the SL resource pool including non-contiguous frequency resources.

Which one of Proposal 6-3), Proposal 6-1), or Proposal 6-2) is applied may be determined based on a setting related to the SL resource pool.

According to Proposal 6-3) described above, it is possible to determine the use method based on a service or quality desired to be implemented in the SL resource pool including non-contiguous frequency resources.

Proposal 7) Sidelink SS/PBCH block (S-SSB) transmission may be performed in the SL resource pool including non-contiguous frequency resources. Hereinafter, an operation related to the S-SSB will be described, but different operations may be applied to each of a sidelink primary synchronization signal (S-PSS), a sidelink secondary synchronization signal (S-SSS), and a physical sidelink broadcast channel (PSBCH). Proposal 7) may be combined with any one of Proposal 1), Proposal 2), Proposal 3), Proposal 4), Proposal 5), and Proposal 6).

Proposal 7-1) The S-SSB may be transmitted on a predetermined actual CC. For example, an actual CC that performs S-SSB transmission may be configured.

According to Proposal 7-1) described above, it is possible to clarify a CC on which the S-SSB transmission is performed, and it is easy to achieve common understanding between the UEs.

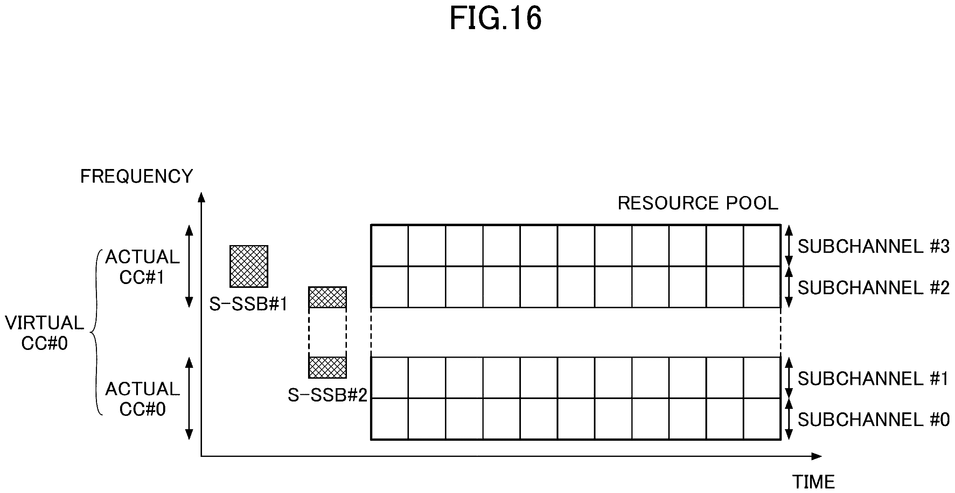

Proposal 7-2) Fig. 16 is a diagram for describing Example (1) of the S-SSB according to the embodiment of the present invention. Like an S-SSB #1 illustrated in Fig. 16, the S-SSB may be transmitted by being confined within a single actual CC and does not have to be transmitted over multiple actual CCs. For example, information (for example, TDD configuration or a slot index) transmitted on the S-SSB may be information related to the actual CC on which the S-SSB is transmitted, or may be information related to any actual CC of the resource pool.

According to Proposal 7-2) described above, the S-SSB configuration can be simplified.

Proposal 7-3) Like an S-SSB #2 illustrated in Fig. 16, the S-SSB may be transmitted over multiple actual CCs. For example, such a case may be limited to a case where the numerology or SCS is the same between the actual CCs, or the numerology or SCS may be different between the actual CCs. For example, the information (for example, the TDD configuration or the slot index) transmitted on the S-SSB may be information related to at least one of the actual CCs on which the S-SSB is transmitted, or may be information related to one of the actual CCs of the resource pool.

According to Proposal 7-3) described above, it is possible to flexibly configure an S-SSB resource.

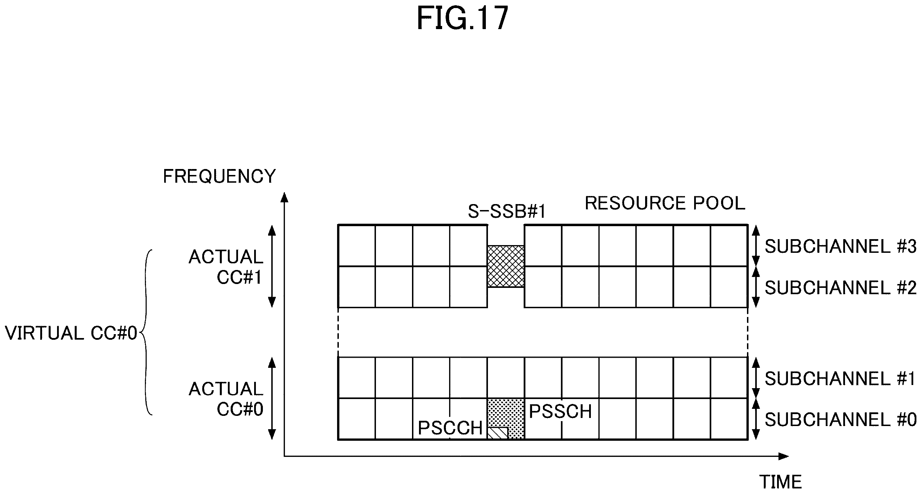

Proposal 7-4) Fig. 17 is a diagram for describing Example (2) of the S-SSB according to the embodiment of the present invention. As illustrated in Fig. 17, transmission and reception of the PSCCH, the PSSCH, or the PSFCH may be able to be performed on the slot on which the S-SSB is transmitted in the actual CC on which the S-SSB is not transmitted. In the existing technology, the slot on which the S-SSB is transmitted is not included in the resource pool and cannot be used for transmission and reception of the PSCCH, the PSSCH, or the PSFCH.

For example, the slot on which the S-SSB is transmitted may also be included in the resource pool, and counting of the number of slot offsets for the resource reservation or the PSFCH occasion may be performed. For example, in a case where the periodic resource reservation indicates the S-SSB resource, it may be assumed that the resource reservation is not performed and resource reservation of a next available slot is indicated.

For example, simultaneous transmission or simultaneous reception of the S-SSB and the PSCCH, the PSSCH, or the PSFCH may be able to be performed. Processing related to a priority may be executed assuming that the S-SSB has the highest priority (with the smallest priority value). The operation may be determined based on the UE capability. Furthermore, for example, like the actual CC #1 in Fig. 17, the resource of the actual CC on which the S-SSB is transmitted does not have to be included in the resource pool or may be treated as included.

According to Proposal 7-4) described above, resources can be utilized without waste.

The above-described example may be applied to D2D of the NR or may be applied to D2D of another RAT. In addition, the above-described example may be applied to FR2 or may be applied to other frequency bands.

The above-described example is not limited to the V2X terminal, and may be applied to a terminal that performs D2D communication.

The operation according to the above-described example may be performed only with a specific resource pool. For example, the processing may be executed only with a resource pool available to the terminal 20 of 3GPP release 17 or 3GPP release 18 or later.

According to the above-described example, the terminal 20 can perform communication by using a resource pool including non-contiguous frequency resources.

That is, wideband resources that are non-contiguous in the frequency domain can be used for the terminal-to-terminal direct communication.

### (Device Configuration)

Next, functional configuration examples of the base station 10 and the terminal 20 that execute the processing and operations described above will be described. The base station 10 and the terminal 20 have functions of implementing the above-described example. However, each of the base station 10 and the terminal 20 may have only some functions in the example.

### <Base Station 10>

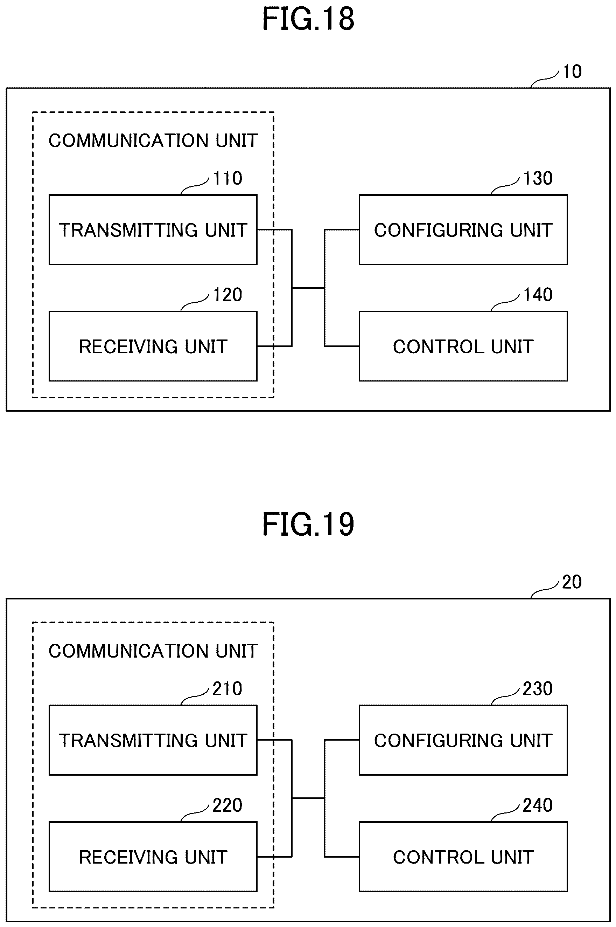

Fig. 18 is a diagram illustrating an example of a functional configuration of the base station 10. As illustrated in Fig. 18, the base station 10 includes a transmitting unit 110, a receiving unit 120, a configuring unit 130, and a control unit 140. The functional configuration illustrated in Fig. 18 is merely an example. As long as the operation according to the embodiment of the present invention can be performed, the names of the functional divisions and functional units may be any names.

The transmitting unit 110 has a function of generating a signal to be transmitted to the terminal 20 and wirelessly transmitting the signal. The receiving unit 120 has a function of receiving various signals transmitted from the terminal 20 and acquiring, for example, information of a higher layer from the received signals. The transmitting unit 110 has a function of transmitting an NR-PSS, an NR-SSS, an NR-PBCH, a DL/UL control signal, a DL reference signal, and the like to the terminal 20.

The configuring unit 130 stores configuration information configured in advance and various types of configuration information to be transmitted to the terminal 20 in a storage device, and reads the configuration information from the storage device as necessary. A content of the configuration information is, for example, information related to the configuration of D2D communication.

As described in the example, the control unit 140 executes processing related to the configuration for the terminal 20 to perform D2D communication. Furthermore, the control unit 140 transmits scheduling of D2D communication and DL communication to the terminal 20 via the transmitting unit 110. Furthermore, the control unit 140 receives information regarding HARQ responses of the D2D communication and the DL communication from the terminal 20 via the receiving unit 120. The functional unit related to signal transmission in the control unit 140 may be included in the transmitting unit 110, and the functional unit related to signal reception in the control unit 140 may be included in the receiving unit 120.

### <Terminal 20>

Fig. 19 is a diagram illustrating an example of a functional configuration of the terminal 20. As illustrated in Fig. 19, the terminal 20 includes a transmitting unit 210, a receiving unit 220, a configuring unit 230, and a control unit 240. The functional configuration illustrated in Fig. 19 is merely an example. As long as the operation according to the embodiment of the present invention can be performed, the names of the functional divisions and functional units may be any names.

The above-described LTE-SL transmission/reception mechanism (module) and the above-described NR-SL transmission/reception mechanism (module) may separately include the transmitting unit 210, the receiving unit 220, the configuring unit 230, and the control unit 240.

The transmitting unit 210 creates a transmission signal from transmission data and wirelessly transmits the transmission signal. The receiving unit 220 wirelessly receives various signals and acquires a signal of a higher layer from the received signal of a physical layer. The receiving unit 220 has a function of receiving an NR-PSS, an NR-SSS, an NR-PBCH, a DL/UL/SL control signal, a reference signal, and the like transmitted from the base station 10. For example, the transmitting unit 210 transmits a physical sidelink control channel (PSCCH), a physical sidelink shared channel (PSSCH), a physical sidelink discovery channel (PSDCH), a physical sidelink broadcast channel (PSBCH), or the like to another terminal 20 as D2D communication, and the receiving unit 220 receives the PSCCH, the PSSCH, the PSDCH, the PSBCH, or the like from another terminal 20.

The configuring unit 230 stores various types of configuration information received from the base station 10 or the terminal 20 by the receiving unit 220 in the storage device, and reads various types of configuration information from the storage device as necessary. The configuring unit 230 also stores configuration information configured in advance. A content of the configuration information is, for example, information related to the configuration of D2D communication.

As described in the example, the control unit 240 controls D2D communication for establishing RRC connection with another terminal 20. Furthermore, the control unit 240 executes processing related to a power saving operation. The control unit 240 executes processing related to HARQ of the D2D communication and the DL communication. The control unit 240 transmits, to the base station 10, information related to HARQ responses of the D2D communication and the DL communication scheduled from the base station 10 to another terminal 20. The control unit 240 may schedule the D2D communication with another terminal 20. The control unit 240 may autonomously select a resource to be used for the D2D communication from a resource selection window based on a sensing result, or may perform reevaluation or pre-emption. The control unit 240 executes processing related to power saving in transmission and reception of the D2D communication. The control unit 240 executes processing related to inter-terminal cooperation in the D2D communication. The functional unit related to signal transmission in the control unit 240 may be included in the transmitting unit 210, and the functional unit related to signal reception in the control unit 240 may be included in the receiving unit 220.

### (Hardware Configuration)

The block diagrams (Figs. 18 and 19) used for describing the above embodiment illustrate blocks of functional units. The functional blocks (components) are implemented by an arbitrary combination of at least one of hardware or software. A method for implementing each functional block is not particularly limited. That is, each functional block may be implemented by using one physically or logically combined device, or may be implemented by directly or indirectly (for example, in a wired or wireless manner) connecting two or more physically or logically separated devices and using a plurality of these devices. The functional block may be implemented by combining software with the one device or the plurality of devices.

The functions include, but are not limited to, determining, judging, calculating, processing, deriving, investigating, looking up (searching or inquiring), ascertaining, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. For example, a functional block (component) for transmission is referred to as a transmitting unit or a transmitter. In any case, as described above, an implementation method thereof is not particularly limited.

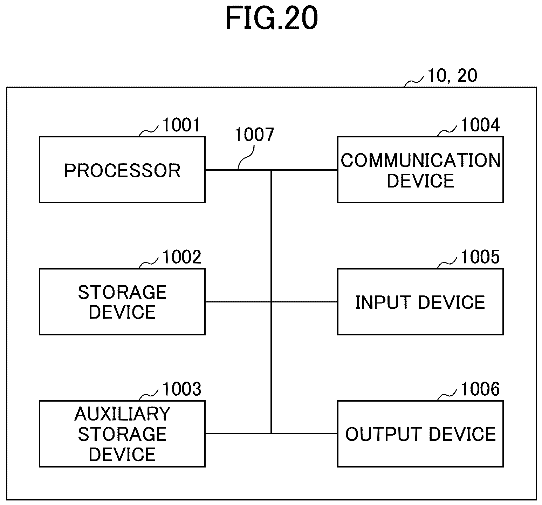

For example, the base station 10, the terminal 20, or the like in an embodiment of the present disclosure may function as a computer that executes processing of a radio communication method of the present disclosure. Fig. 20 is a diagram illustrating an example of a hardware configuration of the base station 10 and the terminal 20 according to an embodiment of the present disclosure. The base station 10 and the terminal 20 described above may be physically configured as a computer device including a processor 1001, a storage device 1002, an auxiliary storage device 1003, a communication device 1004, an input device 1005, an output device 1006, a bus 1007, and the like.

In the following description, the term "device" can be read as a circuit, a unit, or the like. The hardware configuration of the base station 10 and the terminal 20 may include one or more devices illustrated in the drawing, or may be configured without including some devices.

Each function in the base station 10 and the terminal 20 is implemented by the processor 1001 performing an arithmetic operation by loading predetermined software (program) on hardware such as the processor 1001 or the storage device 1002, controlling communication by the communication device 1004, and controlling at least one of reading or writing of data in the storage device 1002 and the auxiliary storage device 1003.

The processor 1001 operates, for example, an operating system to control the entire computer. The processor 1001 may be implemented by a central processing unit (CPU) including an interface for a peripheral device, a control device, an arithmetic device, a register, and the like. For example, the control unit 140, the control unit 240, and the like described above may be implemented by the processor 1001.

In addition, the processor 1001 reads a program (program code), a software module, data, or the like from at least one of the auxiliary storage device 1003 or the communication device 1004 to the storage device 1002, and executes various types of processing according to the program, the software module, the data, or the like. As the program, a program that causes the computer to perform at least a part of the operations described in the above-described embodiment is used. For example, the control unit 140 of the base station 10 illustrated in Fig. 18 may be implemented by a control program stored in the storage device 1002 and operated by the processor 1001. Furthermore, for example, the control unit 240 of the terminal 20 illustrated in Fig. 19 may be implemented by a control program stored in the storage device 1002 and operated by the processor 1001. Although it has been described that the above-described various types of processing are executed by one processor 1001, the various types of processing may be executed simultaneously or sequentially by two or more processors 1001. The processor 1001 may be implemented by one or more chips. The program may be transmitted from a network via an electric communication line.

The storage device 1002 is a computer-readable recording medium, and may be implemented by, for example, at least one of a read only memory (ROM), an erasable programmable ROM (EPROM), an electrically erasable programmable ROM (EEPROM), or a random access memory (RAM). The storage device 1002 may be referred to as a register, a cache, a main memory (main storage device), or the like. The storage device 1002 can store a program (program code), a software module, and the like that can be executed to implement the communication method according to the embodiment of the present disclosure.

The auxiliary storage device 1003 is a computer-readable recording medium, and may be implemented by, for example, at least one of an optical disk such as a compact disc ROM (CD-ROM), a hard disk drive, a flexible disk, a magneto-optical disk (for example, a compact disc, a digital versatile disc, or a Blu-ray (registered trademark) disc), a smart card, a flash memory (for example, a card, a stick, or a key drive), a floppy (registered trademark) disk, or a magnetic strip. The above-described storage medium may be, for example, a database, a server, or another appropriate medium including at least one of the storage device 1002 or the auxiliary storage device 1003.

The communication device 1004 is hardware (transmission/reception device) for performing communication between computers via at least one of a wired network or a wireless network, and is also referred to as, for example, a network device, a network controller, a network card, or a communication module. The communication device 1004 may include a high-frequency switch, a duplexer, a filter, a frequency synthesizer, and the like in order to implement, for example, at least one of frequency division duplex (FDD) or time division duplex (TDD). For example, a transmission/reception antenna, an amplifier unit, a transmitting/receiving unit, a transmission/reception path interface, and the like may be implemented by the communication device 1004. The transmitting/receiving unit may be physically or logically separated into the transmitting unit and the receiving unit.

The input device 1005 is an input device (for example, a keyboard, a mouse, a microphone, a switch, a button, or a sensor) that receives an input from the outside. The output device 1006 is an output device (for example, a display, a speaker, or an LED lamp) that performs output to the outside. The input device 1005 and the output device 1006 may be integrated with each other (for example, a touch panel).

In addition, the devices such as the processor 1001 and the storage device 1002 are connected by the bus 1007 for communicating information. The bus 1007 may be implemented using a single bus or may be implemented using different buses for the devices.

Furthermore, the base station 10 and the terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by the hardware. For example, the processor 1001 may be implemented using at least one of these pieces of hardware.

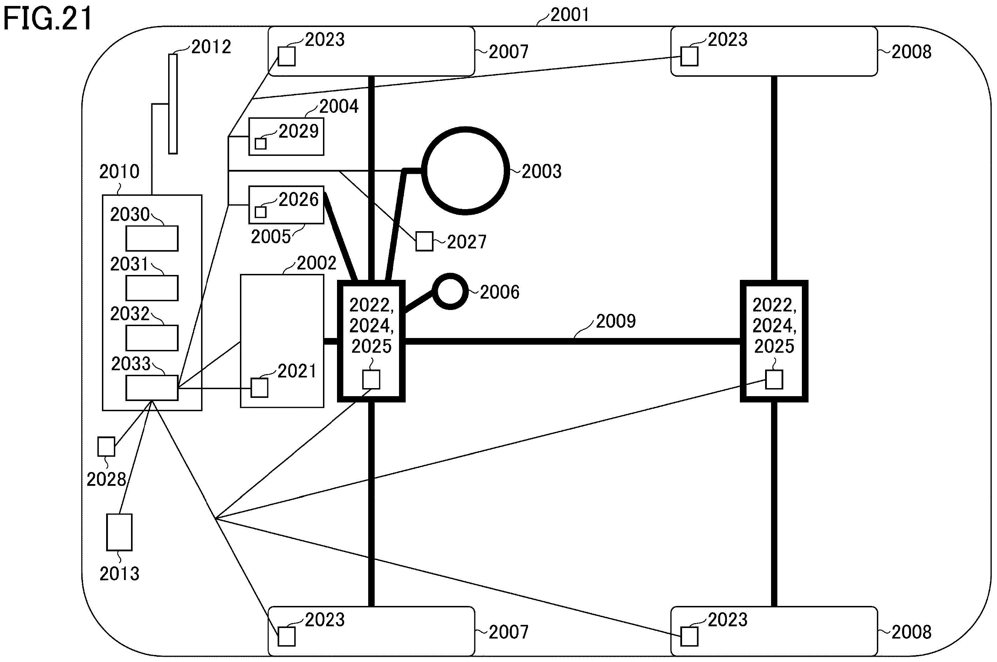

Fig. 21 illustrates a configuration example of a vehicle 2001. As illustrated in Fig. 21, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021 to 2029, an information service unit 2012, and a communication module 2013. Each aspect/embodiment described in the present disclosure may be applied to a communication device mounted on the vehicle 2001, and for example, may be applied to the communication module 2013.

The drive unit 2002 is implemented by, for example, an engine, a motor, or a hybrid of the engine and the motor. The steering unit 2003 includes at least a steering wheel, and is configured to steer at least one of the front wheel or the rear wheel based on an operation of the steering wheel by the user.

The electronic control unit 2010 includes a microprocessor 2031, a memory (ROM or RAM) 2032, and a communication port (IO port) 2033. Signals from the various sensors 2021 to 2029 included in the vehicle 2001 are input to the electronic control unit 2010. The electronic control unit 2010 may be referred to as an electronic control unit (ECU).

Examples of the signals from the various sensors 2021 to 2029 include a current signal from the current sensor 2021 that senses a current of the motor, a rotation speed signal of the front wheel or the rear wheel acquired by the rotation speed sensor 2022, an air pressure signal of the front wheel or the rear wheel acquired by the air pressure sensor 2023, a vehicle speed signal acquired by the vehicle speed sensor 2024, an acceleration signal acquired by the acceleration sensor 2025, a depression amount signal of the accelerator pedal acquired by the accelerator pedal sensor 2029, a depression amount signal of the brake pedal acquired by the brake pedal sensor 2026, an operation signal of the shift lever acquired by the shift lever sensor 2027, and a detection signal for detecting an obstacle, a vehicle, a pedestrian, or the like acquired by the object detection sensor 2028.

The information service unit 2012 includes various devices for providing various types of information such as driving information, traffic information, and entertainment information, such as a car navigation system, an audio system, a speaker, a television, and a radio, and one or more ECUs that control such devices. The information service unit 2012 provides various types of multimedia information and multimedia services to an occupant of the vehicle 2001 by using information acquired from an external device via the communication module 2013 or the like.

A driving assistance system unit 2030 includes various devices for providing functions for preventing an accident in advance and reducing a driver's driving load, such as a millimeter wave radar, a light detection and ranging (LiDAR), a camera, a positioning locator (for example, GNSS), map information (for example, a high definition (HD) map or an autonomous vehicle (AV) map), a gyro system (for example, an inertial measurement unit (IMU) or an inertial navigation system (INS)), an artificial intelligence (AI) chip, and an AI processor, and one or more ECUs for controlling such devices. The driving assistance system unit 2030 transmits and receives various types of information via the communication module 2013 to achieve a driving assistance function or an automated driving function.

The communication module 2013 may communicate with the microprocessor 2031 and the components of the vehicle 2001 via a communication port. For example, the communication module 2013 transmits and receives data to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM or RAM) 2032 in the electronic control unit 2010, and the sensors 2021 to 2029 included in the vehicle 2001 via the communication port 2033.

The communication module 2013 is a communication device that can be controlled by the microprocessor 2031 of the electronic control unit 2010 and can communicate with an external device. For example, various types of information are transmitted and received to and from an external device by radio communication. The communication module 2013 may be provided inside or outside the electronic control unit 2010. The external device may be, for example, a base station or a mobile station.

The communication module 2013 transmits a current signal input from the current sensor to the electronic control unit 2010 to an external device by radio communication. In addition, the communication module 2013 transmits, to an external device by radio communication, the rotation speed signal of the front wheel or the rear wheel acquired by the rotation speed sensor 2022, the air pressure signal of the front wheel or the rear wheel acquired by the air pressure sensor 2023, the vehicle speed signal acquired by the vehicle speed sensor 2024, the acceleration signal acquired by the acceleration sensor 2025, the depression amount signal of the accelerator pedal acquired by the accelerator pedal sensor 2029, the depression amount signal of the brake pedal acquired by the brake pedal sensor 2026, the operation signal of the shift lever acquired by the shift lever sensor 2027, the detection signal for detecting an obstacle, a vehicle, a pedestrian, or the like acquired by the object detection sensor 2028, and the like, the signals being input to the electronic control unit 2010.

The communication module 2013 receives various types of information (traffic information, signal information, inter-vehicle information, and the like) transmitted from an external device, and displays the information on the information service unit 2012 included in the vehicle 2001. The communication module 2013 stores various types of information received from an external device in the memory 2032 available by the microprocessor 2031. The microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021 to 2029, and the like included in the vehicle 2001 based on the information stored in the memory 2032.

### (Summary of Embodiment)

As described above, according to the embodiment of the present invention, there is provided a terminal including: a receiving unit that receives a signal from another terminal on any subchannel included in a resource pool including non-contiguous frequency resources; a transmitting unit that transmits a signal to another terminal on any subchannel included in the resource pool; and a control unit that determines in which actual component carriers subchannels constituting the resource pool are included, wherein the transmitting unit transmits a data signal to another terminal in the resource pool.

With the above configuration, the terminal 20 can perform communication by using the resource pool including non-contiguous frequency resources. That is, wideband resources that are non-contiguous in the frequency domain can be used for the terminal-to-terminal direct communication.

In a case where the control unit determines that each of the subchannels is included in a single one of the actual component carriers, the transmitting unit may transmit the data signal on the single one of the actual component carriers. With the configuration, the terminal 20 can perform communication by using the resource pool including non-contiguous frequency resources.

In a case where the control unit determines that each of the subchannels is included in a single one of the actual component carriers, the transmitting unit may transmit the data signal on a plurality of the actual component carriers. With the configuration, the terminal 20 can perform communication by using the resource pool including non-contiguous frequency resources.

In a case where the control unit determines that at least one of the subchannels is included in a plurality of the actual component carriers, the transmitting unit may transmit the data signal on a single one of the actual component carriers. With the configuration, the terminal 20 can perform communication by using the resource pool including non-contiguous frequency resources.

In a case where the control unit determines that at least one of the subchannels is included in a plurality of the actual component carriers, the transmitting unit may transmit the data signal on the plurality of actual component carriers. With the configuration, the terminal 20 can perform communication by using the resource pool including non-contiguous frequency resources.

According to the embodiment of the present invention, there is provided a communication method executed by a terminal, the communication method including: a receiving step of receiving a signal from another terminal on any subchannel included in a resource pool including non-contiguous frequency resources; a transmitting step of transmitting a signal to another terminal on any subchannel included in the resource pool; a control step of determining in which actual component carriers subchannels constituting the resource pool are included; and a step of transmitting a data signal to another terminal in the resource pool.

With the above configuration, the terminal 20 can perform communication by using the resource pool including non-contiguous frequency resources. That is, wideband resources that are non-contiguous in the frequency domain can be used for the terminal-to-terminal direct communication.

### (Supplement to Embodiment)

Although the embodiment of the present invention has been described above, the disclosed invention is not limited to such an embodiment, and those skilled in the art will understand various changes, modifications, alternatives, substitutions, and the like. Although the description has been given using specific numerical examples to facilitate understanding of the invention, these numerical values are merely examples, and any appropriate value may be used unless otherwise specified. The classification of items in the above description is not essential to the present invention, and matters described in two or more items may be used in combination as necessary, or a matter described in one item may be applied to a matter described in another item (as long as there is no contradiction). A boundary between the functional units or processing units in the functional block diagram does not necessarily correspond to a boundary of physical components. The operation of the plurality of functional units may be physically performed by one component, or the operation of one functional unit may be physically performed by a plurality of components. In the processing procedure described in the embodiment, the order of the processing may be changed as long as there is no contradiction. For convenience of processing description, the base station 10 and the terminal 20 have been described using the functional block diagram, but such a device may be implemented by hardware, software, or a combination thereof. The software operated by the processor included in the base station 10 according to the embodiment of the present invention and the software operated by the processor included in the terminal 20 according to the embodiment of the present invention may be stored in any appropriate storage medium such as a random access memory (RAM), a flash memory, a read-only memory (ROM), an EPROM, an EEPROM, a register, a hard disk (HDD), a removable disk, a CD-ROM, a database, or a server.

Furthermore, notification of information is not limited to the aspect/embodiment described in the present disclosure, and may be performed using other methods. For example, the notification of information may be performed by physical layer signaling (for example, downlink control information (DCI) or uplink control information (UCI)), higher layer signaling (for example, radio resource control (RRC) signaling or medium access control (MAC) signaling), broadcast information (master information block (MIB) or system information block (SIB)), other signals, or a combination thereof. Furthermore, the RRC signaling may be referred to as an RRC message, and may be, for example, an RRC connection setup message, an RRC connection reconfiguration message, or the like.

Each aspect/embodiment described in the present disclosure may be applied to at least one of a system using Long Term Evolution (LTE), LTE-Advanced (LTE-A), SUPER 3G, IMT-Advanced, 4th generation mobile communication system (4G), 5th generation mobile communication system (5G), 6th generation mobile communication system (6G), xth generation mobile communication system (xG) (xG (x is, for example, an integer or a decimal), Future Radio Access (FRA), New Radio (NR), New radio access (NX), Future generation radio access (FX), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or other appropriate systems, or the next generation system that is extended, modified, created, and defined based on such systems. Further, a plurality of systems may be applied in combination (for example, a combination of at least one of LTE or LTE-A and 5G).

The order of the processing procedure, sequence, flowchart, and the like of each aspect/embodiment described in the present specification may be changed as long as there is no contradiction. For example, for the methods described in the present disclosure, elements of various steps are presented using an exemplary order, and are not limited to the particular order presented.

The specific operation described as being performed by the base station 10 in the present specification may be performed by an upper node thereof in some cases. In a network including one or more network nodes including the base station 10, it is obvious that various operations performed for communication with the terminal 20 may be performed by at least one of the base station 10 or another network node (for example, an MME or S-GW is conceivable, but the network node is not limited thereto) other than the base station 10. Although a case where there is one network node other than the base station 10 has been exemplified above, the other network node may be a combination of a plurality of other network nodes (for example, the MME and the S-GW).

Information, a signal, or the like described in the present disclosure can be output from a higher layer (or lower layer) to a lower layer (or higher layer). Input and output may be performed via a plurality of network nodes.

Input/output information and the like may be stored in a specific location (for example, a memory) or may be managed using a management table. The input/output information and the like can be overwritten, updated, or additionally written. The output information and the like may be deleted. The input information and the like may be transmitted to another device.

The determination in the present disclosure may be made by a value represented by one bit (0 or 1), may be made by a Boolean value (true or false), or may be made by comparison of numerical values (for example, comparison with a predetermined value).

Regardless of being referred to as software, firmware, middleware, a microcode, or a hardware description language, or by other names, software should be interpreted broadly so as to mean an instruction, an instruction set, a code, a code segment, a program code, a program, a subprogram, a software module, an application, a software application, a software package, a routine, a subroutine, an object, an executable file, an execution thread, a procedure, a function, or the like.

The software, instruction, information, and the like may be transmitted and received via a transmission medium. For example, when the software is transmitted from a website, a server, or other remote source by using at least one of a wired technology (a coaxial cable, an optical fiber cable, a twisted pair, a digital subscriber line (DSL), or the like) or a wireless technology (infrared rays, microwaves, or the like), at least one of the wired technology or the wireless technology is included within the definition of the transmission medium.

The information, signal, and the like described in the present disclosure may be represented using any of a variety of different technologies. For example, data, an instruction, a command, information, a signal, a bit, a symbol, a chip, and the like that may be mentioned throughout the above description may be represented by a voltage, a current, electromagnetic waves, a magnetic field or particles, an optical field or photons, or any combination thereof.

The terms described in the present disclosure and the terms necessary for understanding the present disclosure may be replaced with terms having the same or similar meanings. For example, at least one of a channel or a symbol may be a signal (signaling). The signal may also be a message. In addition, a component carrier (CC) may be referred to as a carrier frequency, a cell, a frequency carrier, or the like.

The terms "system" and "network" used in the present disclosure are used interchangeably.

In addition, information, a parameter, and the like described in the present disclosure may be represented using an absolute value, a relative value with respect to a predetermined value, or another corresponding information. For example, a radio resource may be indicated by an index.

The name used for the parameter described above is not limited in any respect. Furthermore, expressions and the like using the parameters may be different from those explicitly disclosed in the present disclosure. Since various channels (for example, the PUCCH and the PDCCH) and information elements can be identified by various suitable names, various names assigned to the various channels and information elements are not limiting in any way.

In the present disclosure, the terms such as "base station (BS)", "radio base station", "base station", "fixed station", "NodeB", "eNodeB (eNB)", "gNodeB (gNB)", "access point", "transmission point", "reception point", "transmission/reception point", "cell", "sector", "cell group", "carrier", and "component carrier" can be used interchangeably. The base station may also be referred to as a macro cell, a small cell, a femto cell, a pico cell, or the like.

The base station may accommodate one or more (for example, three) cells. In a case where the base station accommodates a plurality of cells, the entire coverage area of the base station may be divided into a plurality of smaller areas, and each smaller area may also provide a communication service by a base station subsystem (for example, a small base station for indoor use (remote radio head (RRH))). The term "cell" or "sector" refers to a part of or the entire coverage area of at least one of the base station or the base station subsystem that provides the communication service in the coverage.

In the present disclosure, the terms such as "mobile station (MS)", "user terminal", "user equipment (UE)", and "terminal" can be used interchangeably.

The mobile station may also be referred to by those skilled in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms.

At least one of the base station or the mobile station may be referred to as a transmission device, a reception device, a communication device, or the like. At least one of the base station or the mobile station may be a device mounted on a mobile object, the mobile object itself, or the like. The mobile object may be a vehicle (for example, a car or an airplane), a moving unmanned mobile object (for example, a drone or an autonomous vehicle), or a robot (manned type or unmanned type). At least one of the base station or the mobile station includes a device that does not necessarily move during the communication operation. For example, at least one of the base station or the mobile station may be an Internet of Things (IoT) device such as a sensor.

In addition, the base station in the present disclosure may be read as a user terminal. For example, each aspect/embodiment of the present disclosure may be applied to a configuration in which communication between a base station and a user terminal is replaced with communication between a plurality of terminals 20 (for example, referred to as device-to-device (D2D) communication or vehicle-to-everything (V2X) communication). In this case, the terminal 20 may have the function of the base station 10 described above. In addition, the terms such as "up" and "down" may be read as terms corresponding to terminal-to-terminal communication (for example, "side"). For example, an uplink channel, a downlink channel, or the like may be read as a side channel.

Similarly, the user terminal in the present disclosure may be read as a base station. In this case, the base station may have the function of the user terminal described above.

The term "determining" used in the present disclosure may encompass a wide variety of operations. For example, judging, calculating, computing, processing, deriving, investigating, looking up (searching or inquiring) (for example, looking up in a table, a database, or another data structure), and ascertaining can be considered as "determining". Furthermore, receiving (for example, receiving information), transmitting (for example, transmitting information), inputting, outputting, and accessing (for example, accessing data in a memory) can be considered as "determining". In addition, resolving, selecting, choosing, establishing, comparing, and the like can be considered as "determining". That is, any operation can be considered as "determining". Further, "determining" may be read as "assuming", "expecting", "considering", or the like.

The terms "connected", "coupled", or any variation thereof, mean any direct or indirect connection or coupling between two or more elements, and can include a case where one or more intermediate elements are present between two elements that are "connected" or "coupled" to each other. The coupling or connection between elements may be physical coupling or connection, logical coupling or connection, or a combination thereof. For example, "connection" may be read as "access". When used in the present disclosure, two elements can be considered to be "connected" or "coupled" to each other by using at least one of one or more electric wires, one or more cables, or one or more printed electrical connections, and, as some non-limiting and non-exhaustive examples, by using electromagnetic energy having wavelengths in a radio frequency region, a microwave region, and a light (both visible and invisible) region, and the like.

The reference signal may be abbreviated as an RS, or may be referred to as a pilot according to an applied standard.

The phrase "based on" used in the present disclosure does not mean "based only on" unless explicitly stated otherwise. In other words, the phrase "based on" means both "based only on" and "based at least on".

Any reference to elements using designations such as "first", "second", and the like as used in the present disclosure does not generally limit the amount or order of the elements. The designations may be used in the present disclosure as a convenient way to distinguish between two or more elements. Thus, references to first and second elements do not imply that only two elements may be employed or that the first element must in any way precede the second element.

The term "means" in the configuration of each device described above may be read as a "unit", a "circuit", a "device", or the like.

In a case where the present disclosure uses the terms "include", "including", and variations thereof, these terms are intended to be inclusive in a manner similar to the term "comprising". Furthermore, the term "or" used in the present disclosure is intended not to be an exclusive OR.

The radio frame may include one or more frames in the time domain. Each of one or more frames in the time domain may be referred to as a subframe. The subframe may further include one or more slots in the time domain. The subframe may be a fixed time length (for example, 1 ms) independent from the numerology.

The numerology may be a communication parameter applied to at least one of transmission or reception of a signal or channel. The numerology may indicate at least one of, for example, a subcarrier spacing (SCS), a bandwidth, a symbol length, a cyclic prefix length, a transmission time interval (TTI), the number of symbols per TTI, a radio frame configuration, specific filtering processing executed by a transceiver in the frequency domain, or specific windowing processing executed by the transceiver in the time domain.

The slot may include one or more symbols (OFDM (orthogonal frequency division multiplexing) symbols, single carrier frequency division multiple access (SC-FDMA) symbols, or the like) in the time domain. The slot may be a time unit based on the numerology.

The slot may include a plurality of mini-slots. Each mini-slot may include one or more symbols in the time domain. Further, the mini-slot may be referred to as a sub-slot. The mini-slot may include a smaller number of symbols than the slot. A PDSCH (or PUSCH) transmitted in a time unit larger than the mini-slot may be referred to as a PDSCH (or PUSCH) mapping type A. A PDSCH (or PUSCH) transmitted using the mini-slot may be referred to as a PDSCH (or PUSCH) mapping type B.

The radio frame, the subframe, the slot, the mini-slot, and the symbol all represent time units for signal transmission. Different names corresponding to the radio frame, the subframe, the slot, the mini-slot, and the symbol may be used.

For example, one subframe may be referred to as a transmission time interval (TTI), a plurality of consecutive subframes may be referred to as a TTI, and one slot or one mini-slot may be referred to as a TTI. That is, at least one of the subframe or the TTI may be a subframe (1 ms) in the existing LTE, a period shorter than 1 ms (for example, 1 to 13 symbols), or a period longer than 1 ms. A unit representing the TTI may be referred to as a slot, a mini-slot, or the like instead of a subframe.

Here, the TTI refers to, for example, a minimum time unit of scheduling in radio communication. For example, in the LTE system, the base station performs scheduling of allocating radio resources (a frequency bandwidth, transmit power, and the like that can be used in each terminal 20) to each terminal 20 in units of TTIs. The definition of the TTI is not limited thereto.

The TTI may be a transmission time unit such as a channel-coded data packet (transport block), a code block, or a code word, or may be a processing unit such as scheduling or link adaptation. When a TTI is given, a time interval (for example, the number of symbols) in which a transport block, a code block, a code word, or the like is actually mapped may be shorter than the TTI.

In a case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI with a time length of 1 ms may be referred to as a normal TTI (a TTI in LTE Rel. 8 to Rel. 12), normal TTI, a long TTI, a normal subframe, a long subframe, a slot, or the like. A TTI shorter than the normal TTI may be referred to as a shortened TTI, a short TTI, a partial TTI (or fractional TTI), a shortened subframe, a short subframe, a mini-slot, a sub-slot, a slot, or the like.

The long TTI (for example, the normal TTI or the subframe) may be read as a TTI having a time length exceeding 1 ms, and the short TTI (for example, the shortened TTI) may be read as a TTI having a TTI length less than the TTI length of the long TTI and equal to or larger than 1 ms.

The resource block (RB) is a resource allocation unit in the time domain and the frequency domain, and may include one or more contiguous subcarriers in the frequency domain. The number of subcarriers included in the RB may be the same regardless of the numerology, and may be, for example, 12. The number of subcarriers included in the RB may be determined based on the numerology.

In addition, the time domain of the RB may include one or more symbols, and may be a length of one slot, one mini-slot, one subframe, or one TTI. Each of one TTI, one subframe, and the like may include one or more resource blocks.

One or more RBs may be referred to as physical resource blocks (PRBs), sub-carrier groups (SCGs), resource element groups (REGs), PRB pairs, RB pairs, or the like.

Furthermore, the resource block may include one or more resource elements (REs). For example, one RE may be a radio resource area of one subcarrier and one symbol.

The bandwidth part (BWP) (which may also be referred to as a partial bandwidth or the like) may represent a subset of contiguous common resource blocks (RBs) for a certain numerology on a certain carrier. Here, the common RB may be specified by an index of the RB based on a common reference point of the carrier. The PRB may be defined by a certain BWP and numbered within the BWP.

The BWP may include a BWP for UL (UL BWP) and a BWP for DL (DL BWP) . One or more BWPs may be configured in one carrier for the terminal 20.

At least one of the configured BWPs may be active, and the terminal 20 does not have to assume that a predetermined signal/channel is transmitted and received outside the active BWP. The terms "cell", "carrier", and the like in the present disclosure may be read as "BWP".

The above-described structures such as the radio frame, the subframe, the slot, the mini-slot, and the symbol are merely examples. For example, the number of subframes included in a radio frame, the number of slots per subframe or radio frame, the number of mini-slots included in a slot, the number of symbols and the number of RBs included in a slot or mini-slot, the number of subcarriers included in an RB, the number of symbols in a TTI, a symbol length, a cyclic prefix (CP) length, and the like can be variously changed.

In the present disclosure, for example, in a case where articles such as a, an, and the in English are added by translation, the present disclosure may include a case where a noun following these articles is a plural form.

In the present disclosure, the expression "A and B are different" may mean that "A and B are different from each other". The expression may mean that "A and B are different from C". The terms such as "separated", "coupled", and the like may also be interpreted in the same manner as "different".

Each aspect/embodiment described in the present disclosure may be used alone, or may be used in combination, or may be used by being switched according to operations. Furthermore, notification of predetermined information (for example, notification of "X") is not limited to explicit notification, and may be implicit notification (for example, the notification of the predetermined information is not performed).

Although the present disclosure has been described in detail above, it is apparent to those skilled in the art that the present disclosure is not limited to the embodiment described in the present disclosure. The present disclosure can be implemented by modifications and variations without departing from the spirit and scope of the present disclosure defined by the claims. Therefore, the description of the present disclosure is for illustrative purposes only and does not limit the present disclosure.

### Reference Signs List

- 10: Base station
- 110: Transmitting unit
- 120: Receiving unit
- 130: Configuring unit
- 140: Control unit
- 20: Terminal
- 210: Transmitting unit
- 220: Receiving unit
- 230: Configuring unit
- 240: Control unit
- 1001: Processor
- 1002: Storage device
- 1003: Auxiliary storage device
- 1004: Communication device
- 1005: Input device
- 1006: Output device
- 2001: Vehicle
- 2002: Drive unit
- 2003: Steering unit
- 2004: Accelerator pedal
- 2005: Brake pedal
- 2006: Shift lever
- 2007: Front wheel
- 2008: Rear wheel
- 2009: Axle
- 2010: Electronic control unit
- 2012: Information service unit
- 2013: Communication module
- 2021: Current sensor
- 2022: Rotation speed sensor
- 2023: Air pressure sensor
- 2024: Vehicle speed sensor
- 2025: Acceleration sensor
- 2026: Brake pedal sensor
- 2027: Shift lever sensor
- 2028: Object detection sensor
- 2029: Accelerator pedal sensor
- 2030: Driving assistance system unit
- 2031: Microprocessor
- 2032: Memory (ROM or RAM)
- 2033: Communication port (IO port)

## Claims

1. A terminal comprising:
a receiving unit that receives a signal from another terminal on any subchannel included in a resource pool including non-contiguous frequency resources;
a transmitting unit that transmits a signal to another terminal on any subchannel included in the resource pool; and
a control unit that determines in which actual component carriers subchannels constituting the resource pool are included,
wherein the transmitting unit transmits a data signal to another terminal in the resource pool.

2. The terminal according to claim 1, wherein in a case where the control unit determines that each of the subchannels is included in a single one of the actual component carriers, the transmitting unit transmits the data signal on the single one of the actual component carriers.

3. The terminal according to claim 1, wherein in a case where the control unit determines that each of the subchannels is included in a single one of the actual component carriers, the transmitting unit transmits the data signal on a plurality of the actual component carriers.

4. The terminal according to claim 1, wherein in a case where the control unit determines that at least one of the subchannels is included in a plurality of the actual component carriers, the transmitting unit transmits the data signal on a single one of the actual component carriers.

5. The terminal according to claim 1, wherein in a case where the control unit determines that at least one of the subchannels is included in a plurality of the actual component carriers, the transmitting unit transmits the data signal on the plurality of the actual component carriers.

6. A communication method executed by a terminal, the communication method comprising:
a receiving step of receiving a signal from another terminal on any subchannel included in a resource pool including non-contiguous frequency resources;
a transmitting step of transmitting a signal to another terminal on any subchannel included in the resource pool;
a control step of determining in which actual component carriers subchannels constituting the resource pool are included; and
a step of transmitting a data signal to another terminal in the resource pool.
